(19) Europäisches Patentamt / European Patent Office / Office européen des brevets

(11) **EP 3 953 140 B1**

(12) **EUROPEAN PATENT SPECIFICATION**

(45) Date of publication and mention
of the grant of the patent:
**17.01.2024 Bulletin 2024/03**

(21) Application number: **20725766.8**

(22) Date of filing: **10.04.2020**

(51) International Patent Classification (IPC):
**B29C 45/76** (2006.01)

(52) Cooperative Patent Classification (CPC):
**B29C 45/7693;** B29C 2945/76913;
B29C 2945/76939; B29C 2945/76943

(86) International application number:
**PCT/IB2020/053447**

(87) International publication number:
**WO 2020/208602 (15.10.2020 Gazette 2020/42)**

(54) **SOFTWARE-IMPLEMENTENDD METHOD AND SYSTEM FOR PROCESSING RESULTS OF A SIMULATION CARRIED OUT WITH FINITE ELEMENT ANALYSIS SOFTWARE**

SOFTWARIMPLEMENTIERTES VERFAHREN UND -SYSTEM ZUR VERARBEITUNG DER ERGEBNISSE EINER SIMULATION, DIE MIT EINER SOFTWARE ZUR FINITE-ELEMENT-ANALYSE DURCHGEFÜHRT WURDE

PROCÉDÉ ET SYSTÈME MIS EN OEUVRE PAR LOGICIEL POUR TRAITER LES RÉSULTATS D'UNE SIMULATION EFFECTUÉE AVEC UN LOGICIEL D'ANALYSE PAR ÉLÉMENTS FINIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2019 IT 201900005646**

(43) Date of publication of application:
**16.02.2022 Bulletin 2022/07**

(73) Proprietor: **Inglass S.p.A.**
**31020 San Polo di Piave (Treviso) (IT)**

(72) Inventors:
• **VILLA, Riccardo**
**31020 San Polo di Piave (TV) (IT)**
• **TELLAN, Andrea**
**31020 San Polo di Piave (TV) (IT)**

(74) Representative: **Citron, Massimiliano**
**Via Primo Maggio, 6**
**31020 San Fior (TV) (IT)**

(56) References cited:
EP-A1- 2 953 778       EP-B1- 2 953 778
WO-A1-2018/135443   DE-A1- 4 025 221
DE-A1- 4 434 654       JP-A- H10 278 086
US-A1- 2006 277 004   US-B2- 9 180 617

**Description**

The invention relates to a software implemented method for processing results of a simulation created with finite elements analysis software. The invention also refers to a system which implements the method. Document JPH10278086A discloses a method according to the preamble of claim 1.

In general, for a specific piece to mold the definition of optimal configuration parameters of an injection molding press starts from simulation results of the injection process. A widely used simulation software is e.g. Autodesk Moldflow.

The simulation is however incomplete and approximate as it is not possible to directly or indirectly simulate the behavior, action and influence of the press in the molding process.

Due to this inconvenience, it is only the experience of the operator and the number of molding attempts that allows integrating the simulation output and correcting it to reach the final set-up parameters for the press. The simulation results, although theoretically exact, are completely independent of the press, and do not involve all the parameters and real situations; that's why they need to be corrected.

The press is not simulated because it is too complex, so much so that in the simulation software there is no indication of which press to use.

It always happens that the operator who enters the theoretical simulation results in the press is an expert of only one press model, the one available, but does not know others (the presses are very different from each other). Therefore errors and misunderstandings very frequent of those who try to use a press that is not capable to meet the requirements inherent in the simulation results. Or the characteristics and/or parameters of the press involve modification or remaking of the simulation and of the plant obtained from it. This entails waste of time and money as part of the work done needs to be changed and/or redone.

Often one needs to look for companies owning presses that can rent machinery even for only a part of the day and/or for a limited period of time. It therefore becomes essential to understand in the first place which presses are available to evaluate their compatibility with the mold and hot chamber to be used. A lot of time is spent finding a compatible press.

If the press doesn't meet the simulation results, the simulation results must be corrected or the simulation must be re-done.

There is then the problem of choosing, quickly, a suitable press to implement the simulation results.

The main object of the invention is to solve or mitigate the aforementioned problems/drawbacks.

An aspect of the invention relates to a software implemented method to process results of a simulation obtained with finite elements analysis software, adapted to simulate a filling process of a piece molded in a mold by a molten material injected thereinto, wherein:

- from a file of results of the simulation, results are taken,
- a computer Database containing technical specifications of injection molding machines is accessed and
- a search is performed in the Database
  comparing the results read from the file with technical specifications stored in the Database and associated with each press to determine whether a or each press of the Database is able or not to carry out the process, in particular
- a search is performed to generate a first group comprising the presses of the Database unable to carry out the process, and/or a second group comprising the presses of the Database capable of carrying out the process.

The method has several advantages.

Said {search + comparison} allows excluding from subsequent processing, of an electronic processor and/or a user, all the presses that in this step have already been determined to be incompatible with the simulation results, or vice versa to comprise only the available presses by modifying/adapting upstream the processing.

Another advantage of the method is the ability to display or determine the composition of the Database with respect to a search key consisting of simulation parameters.

Preferred steps of the method:

- finding (extracting from the Database) which presses of the Database are and/or are not able to carry out the process, and preferably displaying them to a user (e.g. on video or by storage on a medium (e.g. paper or non volatile memory));
- the comparison between the results read from the file with technical specifications comprises the comparison of values for example of:

  injection volume, and/or
  injection speed, and/or
  injection flow rate, and/or
  injection pressure, and/or

injection temperature for the molten material, and/or
mold closing force, and/or
actual dosage position/volume, or any other technical specification;

- to quickly exclude the presses that in practice could end up unsuitable, and/or to guarantee safety or confidence margins for the results extracted from the Database, the search is performed checking if the data found in the press Database fulfill an order relationship with respect to a corresponding simulation data, e.g. verifying if the data found in the Database are

greater or less than a % of the corresponding simulation data and/or
greater or less than the corresponding simulation data multiplied by a coefficient.

- the search is performed by setting a threshold for the data found in the press Database with respect to a corresponding simulation data;
- a set of set-up parameters is generated for a press as a function of:

the data contained in the simulation file and
data expressing technical characteristics of the press associated with a compatible press found when searching the Database.

In particular, the set of parameters is calculated by means of corrective coefficients, and/or processing, applied to the data contained in the simulation file, the corrective coefficients depending on or being a function of, for example, the following parameters:

injection speed of the press, and/or
injection pressure of the press, and/or
injection temperature for the molten material as achievable by the press, and/or
the diameter of the injection screw in the press, and/or
the efficiency of the injection screw in the press (different for each press); and/or
the size of the injection nozzle; and/or
the volume of the hot runner, and/or
the dimensions of the final cushion of material that remains at the end of the injection in the injection chamber.

Another aspect of the invention relates to a software for performing each of the steps of the method.
The software program that performs the steps of the method, in particular the search for the suitable press(es), may

- be embedded into the simulation software,
- run on a *cloud server,* which can be the same on which said Database of presses is present or even another;
- run on a local memory of an electronic device used for querying the Database of presses (such as a smartphone).

The press Database is e.g. a remote Database, e.g. a site consulted via the Internet. Or it is embedded into said simulation software, or it is stored on a cloud server, or it is stored on a local memory of an electronic device (such as a smartphone).
The advantages of the invention will be even clearer from the following description of a preferred device, in which reference is made to the attached drawing in which

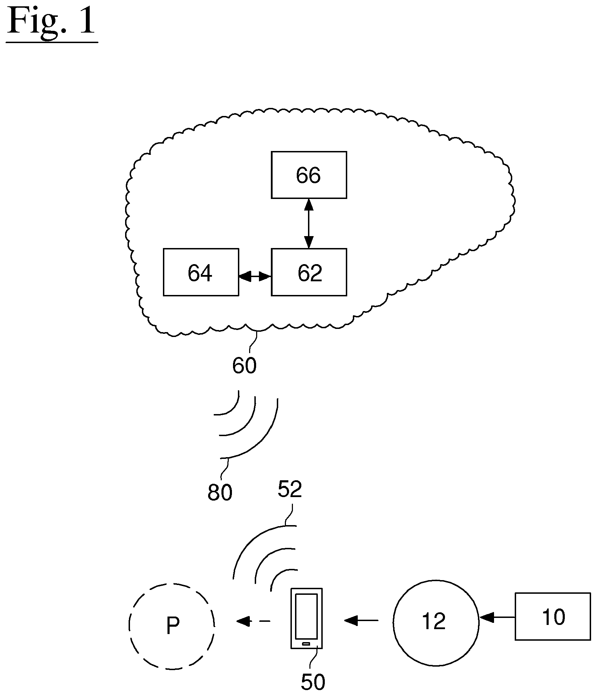

• Figure 1 shows a schematic view of a processing system for a Database of presses.

In the figures: equal numerical references indicate equal elements, and the parts are described as in use.
The method applies to simulation results related to the filling of a piece to be molded with a machine (press) or an injection molding center. The simulation results are generated by a simulation software 10, which saves them and outputs them in a file 12.
The machine or press is generally equipped with a mold with one or more hot runners. A control unit, provided with intelligence, drives the various members of the molding machine during the molding phases. The control unit is programmed with configuration parameters P to perform the molding operations, and the parameters are deduced from the simulation results.
Via a device 50 (e.g. a mobile phone or a smartphone or a PC) an operator reads the file 12. On the device 50 e.g. there is loaded and runs a program (or App) to read the file 12 and extract simulation data from it, such as the maximum injection pressure, which characterize the simulated molding process.

With this data a data packet is transmitted by the device 50, e.g. via GSM or Internet, to a remote computer application 60, e.g. on a Server, via a wireless or wired signal 52. The computer application 60 may also run in the device 50.

The signal 52 is received by a receiver stage 64 and processed by a microprocessor stage 62 (e.g. a PC or Server), which can access a Database 66 of machines or presses containing the operating specifications of the machine, in particular the maximum or minimum values for the operating variables, such as the maximum injection pressure.

The microprocessor stage 62 uses the received data to search (or it processes them first and then looks for the results) in the Database 66 by means of logical comparisons which machine or press is suitable for carrying out the process as simulated.

If there is a suitable machine in the Database 66, the microprocessor stage 62 continues by extracting from the Database 66 an identifier data relating to that machine and saves it in a group of suitable presses (the aforementioned *second group*).

At the end of the search, the microprocessor stage 62 generates a feedback signal 80 to be sent to the device 50 containing the data relating to the second group (including the parameters of each press), in order to make the suitable presses available on the device 50 and inform the user, e.g. with an SMS or a graphic web page or by driving a display.

Note that the device 50 is only a preferred example of interface for interacting with the Database 66. The user could use an equivalent device, e.g. portable as a tablet, a terminal or a dedicated device. Or the user could use a program that runs on the application 60 for launching the search in the Database 66 and populate the second group.

The application 60 is preferably structured as a website, accessible via the Internet, but not necessarily. Preferably, but without limitation, the application 60 is accessible via a smartphone APP.

The application 60 could for example be embedded into the simulation software or in the cloud or run in a local memory of the device 50.

For the feedback signal 80 all the options described for the signal 52 are possible.

As can be seen, the system of fig. 1 allows each time a quick browsing of the Database 66 as a function of the simulation results 12. The knowledge of which presses are compatible or not, and the parameters of each one, simplifies a lot the programming work on the press, and avoids wasted resources on unsuitable presses. That is to say that the system avoids performing molding tests on unsuitable presses and/or avoids performing subsequent simulation or post-processing calculations, which lead to data relating to unsuitable presses.

There is a clear and evident cut in the set-up operations (containment of the consequent costs), in jargon called "mold test", carried out necessarily manually thanks to the experience of the operator.

As an example of compatibility checks to be carried out to guarantee the suitability of a press, refer to the following.

## 1) CHECK OF THE PRESS TONNAGE

From the simulation file 12 the parameter Fs (maximum closure force estimated by the simulation) is detected or extracted/processed. From the Database 66 for each press the parameter Fn (nominal closing force of the press).is read or obtained. In order for the press to be considered suitable, and inserted into the second group (suitable presses), it must be $Fn > c1\ Fs$,

where c1 is a safety factor, e.g. around 1.2.

## 2) VERIFICATION ON MAXIMUM INJECTION PRESSURE

From the simulation file 12, Pmax (maximum injection pressure estimated by the simulation) is read or obtained or extracted/ processed. From the Database 66 the parameter Pn (maximum nominal injection pressure) is detected or extracted/processed.

In order for the press to be considered suitable, and inserted into the second group, it must be $Pn > c2 \cdot Pmax$, where c2 is a safety factor, e.g. around 1.2.

## 3) VERIFICATION ON MAXIMUM INJECTION VOLUME

From the simulation file 12 the V_feed parameter is detected or extracted / processed (estimated dosage volume).

From the Database 66 the parameter Vn (nominal maximum injection volume) is detected or extracted/processed. In order for the press to be deemed suitable, and inserted into the second group, it must be $Vn > c3 \cdot V\_feed$, where c3 is a security factor, e.g. about 1.3.

Note that the coefficients c1, c2, c3 allow discarding the presses that only nominally meet the numerical requirements of the file 12, but which in practice would give unsatisfactory performance. Otherwise in the search inside the Database 66 a confidence threshold or range can be set to select only the presses that abundantly meet the numerical requirements of the file 12.

A preferred variant of the invention envisages to further exploit the search results in the Database 66 to edit the results 12 optimizing them to calculate the configuration parameters P of a suitable press identified in the Database 66.

For this purpose, the user can select, through an interface, one of the presses belonging to the second group (or in any case a press found suitable). From the Database 66 (or other connected Database) technical specifications or functional or set-up parameters of the selected press are extracted, which describe construction and functional characteristics of the press.

With the extracted data, the simulation results of the file 12 are processed to obtain a set of parameters P potentially already suitable for input (manually or automatically) in the press control unit as set-up data.

This processing may be performed on the same device 50.

Below is an example of post-processing performed on the results in the file 12, i.e. the conversion of the injection speed profile.

The injection speed in the simulator is usually defined through a multi-step profile of a % flow rate of injected material as a function of the % injected volume, through the variables

Xaxis = the % injected volume [%] and
Yaxis = flow rate of injected material [%] with respect to the maximum flow rate,

For a press operator it is almost impossible to use an injection profile so defined, since he will have to define a multistep injection profile by setting the screw speed (or flow rate $cm^3/s$) as a function of the position of the injection screw (or cylinder volume).

Consider as an example the 3-step profile defined by the operator:

1st step: from 130 mm (dosing position) to 100 mm with a 5 mm/s speed;
2nd step: from 100 to 40 mm with a 60 mm/s speed;
3rd step: from 40 mm to the switching position (25 mm) with 30 mm/s.

Therefore, for the press control unit, the configuration parameters

Xaxis = screw positions [mm] or corresponding cylinder volume [$cm^3$], and
Yaxis = screw speed [mm/s] or volumetric flow rate [$cm^3/s$]
need to be defined,

For each step of the injection profile, the conversion is carried out as follows.

For the conversion relative to Xaxis, from % injected volume to screw position:
from the file 12 the data are taken:

$$V\_cavity \text{ (volume of the piece cavity (= volume of the piece));}$$

y = V_v/p / V_cavity = 0.95 - 0.98 (ratio between the filled volume of the piece at the switching time and the volume of the overall piece);
%: injected volume i: % injected volume at step i of the simulation profile.

So, at the i-th step, one has:

$$X_i = X\_feed - (\% \text{ Injected volume } i / y) * (X\_feed - X\_v / p),$$

and

$$V_i = X_i * A$$

where

X_feed: dosage position,
X_v/p: previously determined switching position,
Xi: screw position corresponding to %, Injected volume i
Vi: cylinder volume corresponding to Xi,
A: cylinder area.

For the conversion on Yaxis, from % flow rate of material injected at screw speed [mm/ s]:

from the file 12 we take the data
FR_max (maximum flow rate [$cm^3/s$]), and
Flow rate i % (percentage of the maximum flow rate injected in step i of the profile).

Then, in the i-th step, you have:

Flow rate i [$cm^3/s$] = (Flow rate I % / 100) * FR_max
Velocity i = Flow rate i / A
where
A = ($\pi$ * D ^ 2) / 4, the area of the cylinder.

The method is described with reference to a molding machine for injection of plastic material but it can also be replicated in the same way in presses used for the processing of metallic materials, in all types of presses.
The defined final molding data/parameters can be easily and quickly shared in different molding sites located in different areas of the world, perfectly replicating the working conditions, even in the absence of an expert operator.

**Claims**

1. Software-implemented method for processing results of a simulation carried out with finite element analysis software, the software being adapted to simulate a filling process of a molded piece in a mold by a molten material injected into it, wherein:

   - results are taken from a file of simulation results,
   - a computer Database containing technical specifications of injection molding machines is accessed and
   - a search is performed in the Database, **characterized in that** the search is performed in the Database comparing the results read from the file with technical specifications stored in the Database and associated with each press to determine whether or not one or each press of the Database is able to perform the process.

2. Method according to claim 1, wherein a search is carried out in order to generate a first group comprising the presses of the Database unable to perform the process, and/or a second group comprising the presses of the Database able to perform the process.

3. Method according to claim 1 or 2, with the step of finding which presses of the Database are and/or are not able to perform the process, and such presses are presented to a user.

4. Method according to claim 1 or 2 or 3, wherein the search is performed verifying whether the data found in the Database of presses fulfill an order relationship with respect to a corresponding simulation data.

5. Method according to claim 4, wherein for the order relationship it is checked whether the data found in the Database are:

   greater or less than a % of the corresponding simulation data and/or
   greater or less than the corresponding simulation data multiplied by a coefficient.

6. Method according to any previous claim, wherein the search is performed setting a threshold for the data found in the Database of presses with respect to a corresponding simulation data.

7. Method according to any previous claim, wherein a set of set-up parameters is generated for a press as a function of: the data contained in the simulation file and data expressing press technical features associated with a compatible press found during the Database search.

8. Method according to the previous claim, wherein the set of parameters is calculated by means of corrective coefficients and/or processing applied to the data contained in the simulation file.

9. Software program for performing each step of the method according to any preceding claim.

10. Software program according to claim 9, **characterized by** being embedded into the finite element analysis software.

11. Software program according to claim 9, **characterized by** being run on a *cloud server.*

12. Software program according to claim 9, **characterized by** being run on a local memory of an electronic device used for querying the Database of presses

13. Software program according to claim 12, wherein said electronic device is a smartphone.


**Patentansprüche**

1. Softwareimplementiertes Verfahren zur Verarbeitung von Ergebnissen einer mit Finite-Elemente-Analysesoftware durchgeführten Simulation,
wobei die Software so angepasst ist, dass sie einen Füllprozess eines geformten Stücks in einer Form durch ein in sie eingespritztes geschmolzenes Material simuliert, wobei:

    - Ergebnisse werden einer Datei mit Simulationsergebnissen entnommen,
    - Auf eine Computerdatenbank mit technischen Spezifikationen von Spritzgießmaschinen wird zugegriffen und
    - eine Suche in der Datenbank durchgeführt wird,

**dadurch gekennzeichnet, dass** die Suche in der Datenbank durchgeführt wird durch Vergleichen der aus der Datei gelesenen Ergebnisse mit technischen Spezifikationen, die in der Datenbank gespeichert und jeder Druckmaschine zugeordnet sind, um festzustellen, ob eine oder jede Druckmaschine der Datenbank in der Lage ist, den Prozess auszuführen.

2. Verfahren nach Anspruch 1, bei dem eine Suche durchgeführt wird, um eine erste Gruppe zu erzeugen, die die Druckmaschinen der Datenbank umfasst, die den Vorgang nicht ausführen können, und/oder eine zweite Gruppe, die die Druckmaschinen der Datenbank umfasst, die den Vorgang ausführen können.

3. Verfahren nach Anspruch 1 oder 2, mit dem Schritt des Ermittelns, welche Pressen der Datenbank in der Lage sind und/oder nicht in der Lage sind, den Prozess durchzuführen, und solche Pressen einem Benutzer präsentiert werden.

4. Verfahren nach Anspruch 1 oder 2 oder 3, wobei die Suche durchgeführt wird, indem überprüft wird, ob die in der Datenbank der Druckmaschinen gefundenen Daten eine Auftragsbeziehung in Bezug auf entsprechende Simulationsdaten erfüllen.

5. Verfahren nach Anspruch 4, wobei für die Auftragsbeziehung geprüft wird, ob die in der Datenbank gefundenen Daten sind:

    größer oder kleiner als ein % der entsprechenden Simulationsdaten und/oder
    größer oder kleiner als die entsprechenden Simulationsdaten multipliziert mit einem Koeffizienten sein.

6. Verfahren nach einem der vorhergehenden Ansprüche, wobei die Suche durch Setzen eines Schwellenwerts für die in der Datenbank der Druckmaschinen gefundenen Daten in Bezug auf entsprechende Simulationsdaten durchgeführt wird.

7. Verfahren nach einem der vorhergehenden Ansprüche, wobei ein Satz von Einstellparametern für eine Presse als Funktion von Folgendem generiert wird:
die in der Simulationsdatei enthaltenen Daten und Daten, die die technischen Merkmale der Druckmaschine ausdrücken, die mit einer kompatiblen Druckmaschine verbunden sind, die während der Datenbanksuche gefunden wurde.

**8.** Verfahren nach dem vorherigen Anspruch, wobei der Parametersatz mittels Korrekturkoeffizienten und/oder Verarbeitung berechnet wird, die auf die in der Simulationsdatei enthaltenen Daten angewendet wird.

**9.** Softwareprogramm zur Durchführung jedes Schritts des Verfahrens nach einem der vorhergehenden Ansprüche.

**10.** Softwareprogramm nach Anspruch 9, **gekennzeichnet durch** Einbettung in die Finite-Elemente-Analysesoftware.

**11.** Softwareprogramm nach Anspruch 9, **gekennzeichnet durch** die Ausführung auf einem *Cloud-Server.*

**12.** Softwareprogramm nach Anspruch 9, **dadurch gekennzeichnet, dass** es auf einem lokalen Speicher eines elektronischen Geräts ausgeführt wird, das zur Abfrage der Datenbank von Druckmaschinen verwendet wird

**13.** Softwareprogramm nach Anspruch 12, wobei das elektronische Gerät ein Smartphone ist.


**Revendications**

**1.** Procédé mise en oeuvre par logiciel pour traiter les résultats d'une simulation réalisée avec un logiciel d'analyse par éléments finis,
le logiciel étant adapté pour simuler un processus de remplissage d'une pièce moulée dans un moule par un matériau fondu injecté dans celui-ci, dans lequel :

    - les résultats sont issus d'un fichier de résultats de simulation,
    - on accède à une base de données informatique contenant les spécifications techniques des machines de moulage par injection et
    - une recherche est effectuée dans la Base de Données,

**caractérisé en ce que** la recherche est effectuée dans la Base de Données en comparant les résultats lus dans le fichier avec les spécifications techniques stockées dans la Base de Données et associées à chaque presse pour déterminer si une ou chaque presse de la Base de Données est capable ou non d'effectuer le processus.

**2.** Procédé selon la revendication 1, dans lequel on effectue une recherche afin de générer un premier groupe comprenant les presses de la Base de données incapables d'effectuer le processus, et/ou un deuxième groupe comprenant les presses de la Base de données capables d'effectuer le processus..

**3.** Procédé selon la revendication 1 ou 2, avec l'étape de rechercher quelles presses de la Base de Données sont et/ou ne sont pas capables d'effectuer le processus, et de telles presses sont présentées à un utilisateur.

**4.** Procédé selon la revendication 1 ou 2 ou 3, dans lequel la recherche est effectuée en vérifiant si les données trouvées dans la base de données des presses remplissent une relation d'ordre par rapport à une donnée de simulation correspondante.

**5.** Procédé selon la revendication 4, dans lequel pour la relation d'ordre on vérifie si les données trouvées dans la Base de Données sont :

    supérieur ou inférieur à un % des données de simulation correspondantes et/ou
    supérieur ou inférieur aux données de simulation correspondantes multipliées par un coefficient.

**6.** Procédé selon l'une quelconque des revendications précédentes, dans lequel la recherche est effectuée en fixant un seuil pour les données trouvées dans la Base de données des presses par rapport à une donnée de simulation correspondante.

**7.** Procédé selon l'une quelconque des revendications précédentes, dans lequel un ensemble de paramètres de réglage est généré pour une presse en fonction de :
les données contenues dans le fichier de simulation et les données exprimant les caractéristiques techniques de la presse associées à une presse compatible trouvées lors de la recherche dans la Base de données.

**8.** Procédé selon la revendication précédente, dans lequel l'ensemble des paramètres est calculé au moyen de coefficients correctifs et/ou de traitements appliqués aux données contenues dans le fichier de simulation.

**9.** Programme logiciel pour réaliser chaque étape du procédé selon l'une quelconque des revendications précédentes.

**10.** Programme logiciel selon la revendication 9, **caractérisé en ce qu'**il est intégré au logiciel d'analyse par éléments finis.

**11.** Programme logiciel selon la revendication 9, **caractérisé en ce qu'**il est exécuté sur un *serveur cloud*.

**12.** Programme logiciel selon la revendication 9, **caractérisé en ce qu'**il est exécuté sur une mémoire locale d'un dispositif électronique utilisé pour interroger la Base de données des presses

**13.** Programme logiciel selon la revendication 12, dans lequel ledit dispositif électronique est un smartphone.

## Fig. 1

**REFERENCES CITED IN THE DESCRIPTION**

**Patent documents cited in the description**

- JP H10278086 A